# EUROPÄISCHE PATENTSCHRIFT

(11) **EP 0 974 708 B1**
(45) Veröffentlichungstag und Bekanntmachung des Hinweises auf die Patenterteilung: **26.02.2003**
(21) Anmeldenummer: 99113478.4
(22) Anmeldetag: 13.07.1999
(51) Int. Cl.: E04C 5/12, E04C 5/01

(54) **Korrosionsgeschütztes Stahlzugglied**
Steel tension member protected against corrosion
Membre tendu en acier protégé contre la corrosion

(30) Priorität: 24.07.1998 DE 19833332
(43) Veröffentlichungstag der Anmeldung: 26.01.2000
(73) Patentinhaber: Dywidag-Systems International GmbH, 85609 Aschheim (DE); DWK Drahtwerk Köln GmbH, 51063 Köln (DE); Bekaert-CMTM GmbH, 07318 Saalfeld (DE)
(72) Erfinder:
(74) Vertreter: Patentanwälte Möll und Bitterich

(56) Entgegenhaltungen:
- EP-A- 0 059 070
- EP-A- 0 322 317
- EP-A- 0 563 735
- DE-A- 3 427 901
- FR-A- 2 524 030
- GB-A- 1 194 758
- US-A- 3 293 811
- US-A- 3 490 125
- US-A- 4 837 995

## Beschreibung

### Technisches Gebiet:

Die Erfindung betrifft ein korrosionsgeschütztes Stahlzugglied aus einer Mehrzahl von zu einer Litze verdrillten Einzeldrähten sowie eine Keilverankerung mit einem solchen Stahlzugglied.

Im Bauwesen, also bei Umwelteinflüssen ausgesetzten Bauwerken, bereitet der Schutz von Stahlteilen vor Korrosion seit jeher Probleme. Bewehrungseinlagen für Stahlbeton sind zwar durch den Verbund mit dem sie umgebenden Beton und Spannglieder für Spannbeton mit nachträglichem Verbund durch Verpressen der Hüllrohre mit Zementmörtel vor Korrosion weitgehend geschützt; sie werden dadurch aber Bestandteil des Bauwerks und sind von diesem nur durch Zerstörung zu lösen. In der letzten Zeit wird von Bauaufsichtsbehörden immer öfter verlangt, Zugglieder, insbesondere Spannglieder zugänglich und somit kontrollierbar, gegebenenfalls auch auswechselbar zu erhalten, um etwaige Korrosionsschäden frühzeitig feststellen und beheben zu können.

Sowohl für Spannglieder für Spannbeton, die oft auch außerhalb des Querschnitts des Bauwerks geführt werden, insbesondere aber für hochbelastete Zugglieder, wie z.B. Schrägseile für Schrägseilbrücken, werden regelmäßig Litzen aus verdrillten Stahldrähten verwendet. Solche Litzen bestehen in der Regel aus sieben hochfesten Stahldrähten, von denen sich sechs Außendrähte um einen geraden Zentraldraht gruppieren. Derartige Litzen werden üblicherweise mittels Keilverankerungen verankert.

Auf dem Prinzip der Keilverankerung basieren zahlreiche im Spannbetonbau angewendete Spannverfahren. Beim Aufbringen der zu verankernden Zugkraft werden die zumeist aus mehreren Keilsektoren bestehenden Keile durch die Zugkraft in Richtung der Spanngliedachse in eine konische Bohrung in einem Ankerkörper gezogen; dieser Vorgang wird als Schlupf bezeichnet. Dadurch werden in den Keilsektoren radial zur Spanngliedachse hin gerichtete Klemmkräfte erzeugt, welche die Bewegung des Spannglieds hemmen. Voraussetzung hierfür ist, daß der Reibungsbeiwert zwischen Spannglied und Keil größer ist als der Reibungsbeiwert zwischen Keil und konischer Bohrung. Um dies zu gewährleisten, werden die Innenflächen der Keilsektoren üblicherweise mit einer Profilierung zum Beispiel aus einem Gewinde versehen, das in den kegelstumpfförmigen Keilkörper eingeschnitten wird, bevor er in die einzelnen Keilsektoren zerschnitten wird, die anschließend gehärtet werden.

Ein wirksamer Korrosionsschutz von solchen Stahldrahtlitzen muß selbstverständlich auch die Verankerungsbereiche umfassen. Deshalb muß bei sogenannten Fettlitzen, d.h. Litzen, die zum Korrosionsschutz von Fett umgeben und mit einer Umhüllung aus einem aufextrudierten Mantel aus Kunststoff, z.B. PE, versehen sind (US 3 646 748), der sich über die freie Länge der Litzen erstreckende Korrosionsschutz auch in die Verankerungen der Litzen hinein fortgesetzt werden. Dies wird dadurch erreicht, daß die Enden des an den Enden der Litzen über eine gewisse Strecke entfernten PE-Mantels in eine mit Fett gefüllte Kammer münden (EP 0 323 285 B2). Abgesehen davon, daß ein derartiger PE-Mantel keinen absoluten Schutz gegen mechanische Verletzungen zum Beispiel beim Einbau der Litzen bietet, bedingt dies eine relativ komplizierte und daher aufwendige Bauart der Verankerung.

Es ist auch bekannt, Bewehrungselemente aus Stahl zum Schutz gegen Korrosion mit einem Überzug aus Epoxidharz zu versehen. Um derartige Litzen mittels Keilen zu verankern, werden Keile verwendet, die an den Innenflächen eine grobe Zahnung mit abgestumpften Zahnspitzen aufweisen sowie die Dicke des Überzuges und die Höhe sowie die Neigung der Zähne so gewählt, daß die Zahnspitzen den Überzug durchdringen und sich in die Oberfläche der Einzelelemente eindrücken (DE 34 37 107 C2). Infolge der durch die Keile ausgeübten radialen Klemmkraft wird dabei zwar das Material des Überzuges verdrängt, hüllt aber nach wie vor die nicht von den Keilzähnen berührten Teile der Oberfläche der Litzen ein, so daß der Zutritt von Sauerstoff zu den Bereichen verhindert wird, an denen sich Keil und Litze berühren; auf diese Weise soll Reibungskorrosion verhindert werden. Auch ein Überzug aus Epoxidharz bietet aber keinen absoluten mechanischen Schutz; außerdem ist Epoxidharz hitze-, insbesondere brandempfindlich.

Ferner ist auch der allgemeine Gedanke nicht mehr neu, ein Bewehrungselement für Beton, auch eine Litze, dadurch gegen Korrosion zu schützen, daß es als Gesamtheit auf seine ganze Länge durchgehend von einer metallischen Schutzhülle umschlossen wird (DE 29 44 878 A1). Ähnlich wie bei der eingangs erwähnten Fettlitze, der gegenüber eine Schutzhülle aus Metall mechanisch widerstandsfähiger ist, soll auch nach diesem Vorschlag zwischen der Oberfläche des Bewehrungselements und der Schutzhülle eine Schutz- und/oder Ausgleichsschicht angeordnet sein. Dadurch verbleibt zwischen dem Zugglied und der Umhüllung ein Spiel, so daß eine Keilverankerung zumindest problematisch ist.

Schließlich ist aus der EP 0 563 735 A1 ein Verbunddraht bekannt, der aus einem Kem aus hochfestem Stahldraht und einer Umhüllung aus einem längsgebogenen und längsgeschweißten Metallband besteht, das mit dem Kemdraht durch einen Anliegendziehvorgang formschlüssig verbunden ist. Gegenüber den bekannten, durch Verzinken, einen PE-Mantel oder eine Kunststoffbeschichtung gegen Korrosion geschützten Stahldrähten hat dieser Verbunddraht den Vorteil, daß mit dem Korrosionsschutz zugleich ein mechanischer Schutz erreicht wird. Aufgrund der festen Verbindung der Umhüllung mit dem Kerndraht werden dabei Zugfestigkeiten erreicht, die denjenigen von hochfesten Stahldrähten vergleichbar sind. Allerdings liegt dieser Verbunddraht nur als Strangmaterial vor.

Aus US 3 490 125 A ist auch ein korrosionsgeschütztes Stahlzugglied aus einer Mehrzahl von zu einer Litze verdrillten Einzeldrähten bekannt, bei dem jeder der Einzelstahldrähte aus einem durch Oberflächenbehandlung von Anlagerung befreiten Stahldraht mit einer durchgehenden Umhüllung aus einer korrosionsbeständigen Schicht aus Kupronickel besteht. Der festhaftende metallische Verbund zwischen jedem Stahldraht und seine Umhüllung erfolgt durch einen Kaltverformungsvorgang. Ein eventueller Verbund zwischen den einzelnen Stahldrähten und dem Kemdraht wird in US 3 490 125 A jedoch nicht erwähnt.

### Darstellung der Erfindung:

Vor diesem Hintergrund liegt der Erfindung die Aufgabe zugrunde, ein Stahlzugglied, insbesondere zur Verwendung im Bauwesen, zu schaffen, das einen hohen Korrosionsschutz für unterschiedliche Grade der Einwirkung korrodierender Stoffe aufweist und das auf wirtschaftliche Weise hergestellt und eingebaut werden kann, wobei der Korrosionsschutz widerstandsfähig ist gegen mechanische Beanspruchungen, die im rauhen Baubetrieb unvermeidbar sind und der Korrosionsschutz nicht nur in der freien Länge, sondern auch im Verankerungsbereich ohne zusätzliche Maßnahmen wirksam ist.

Erfindungsgemäß wird diese Aufgabe durch ein Stahlzugglied mit den im Anspruch 1 angegebenen Merkmalen gelöst. Gegenstand der Erfindung ist vor allem die Verwendung dieses Stahlzugglieds als Bewehrungselement bzw. als Zugglied mit Keilverankerungen an seinen Enden sowie schließlich eine Keilverankerung mit einem solchen Stahlzugglied.

Vorteilhafte Weiterbildungen ergeben sich aus den Unteransprüchen.

Die Erfindung greift in diesem Zusammenhang zurück auf einen Verbunddraht, wie er aus der EP 0 563 735 A1 bekannt ist. Dabei wird der Grundgedanke der Erfindung darin gesehen, einen derartigen Verbunddraht aus einem Stahldrahtkern und einer damit formschlüssig verbundenen Umhüllung aus einem korrosionsbeständigen Metall als Ausgangsprodukt für die Herstellung einer Litze zu verwenden. Es hat sich - entgegen allen Vermutungen - gezeigt, daß bei diesem Verbunddraht einerseits durch die vorherige Oberflächenreinigung, andererseits auch durch die gemeinsame Kaltverformung mit Zwischenglühen des Metallmantels, nicht nur ein mechanischer Formschluß zwischen dem Kerndraht und der Umhüllung, sondern regelrecht eine Art metallurgischen Verbundes erreicht wird. Der Verbunddraht ist außerdem weitgehend unempfindlich gegen Querbiegung und Querzug, da die Umhüllung relativ dick und verhältnismäßig weich ist; er läßt also ohne weiteres die Verarbeitung eines solchen Verbunddrahtes zu Litzen zu. Besonders vorteilhaft ist, daß in der Litze jeder einzelne Draht für sich gegen Korrosion geschützt ist und nicht, wie bekannt, die Litze als Ganzes nachträglich mit korrosionsschützenden Maßnahmen versehen werden muß mit allen Risiken eventueller Fehlstellen.

Eine solche Litze eignet sich nicht nur als Bewehrungselement für Beton, gegebenenfalls nach den Verbund verbessernden Maßnahmen, sondern vor allem als Zugglied, insbesondere als Spannglied im Bauwesen, bei dem die in das Zugglied eingetragene Zugkraft an seinen Enden mittels Endverankerungen übertragen wird.

Ein besonderer Vorteil der Erfindung besteht darin, daß diese Verbunddrähte sowohl hinsichtlich ihrer Abmessungen, als auch hinsichtlich ihrer mechanischen Eigenschaften den üblichen Litzendrähten entsprechen. Eine geringe Einbuße des Kerndrahtes an Querschnittsfläche, wenn die Nenndurchmesser konstant gehalten werden sollen, wird durch die nachträgliche gemeinsame Kaltverformung von Kemdraht und Umhüllung ausgeglichen, wobei auch das Material der Umhüllung eine Festigkeitssteigerung erfährt. Es sind also keine besonderen Bemessungsoder Behandlungsregeln erforderlich. Wegen des guten Verbundes zwischen den Kerndrähten und den Umhüllungen ihrer Einzelelemente können zur Verankerung einer solchen Litze die üblichen Verankerungssysteme, nämlich Keilverankerungen, angewendet werden, wobei der in der freien Länge bestehende Korrosionsschutz auch im Bereich der Verankerung vorhanden ist; dadurch entfallen zusätzliche Maßnahmen im Verankerungsbereich, wie sie bisher erforderlich waren.

Gerade bei Keilverankerungen zeigt sich ein weiterer Vorteil der Verwendung von aus solchen Verbunddrähten bestehenden Litzen als Zugglieder, insbesondere als Spannglieder. Wenn die Dicke der Umhüllung der Kerndrähte sowie die Höhe und die Neigung der Zähne der Profilierung der Keilsektoren so aufeinander abgestimmt sind, daß die Zahnspitzen bei klemmender Fixierung des Spannglieds die Umhüllung nicht durchdringen, wirkt die Umhüllung wie eine Schutzhülle für den Kerndraht gegen Keilbiß. Dies ist der Fall, wenn die Spitzen der Zähne etwa bis zur Hälfte bis zu Zweidrittel der Dicke der Umhüllung in diese eindringen. Dadurch wird mit der erfindungsgemäßen Litze bei Keilverankerungen ein Wirkungsgrad von nahezu 100 % erreicht; ein solcher Wirkungsgrad kann mit keinem anderen bekannten Spannglied erzielt werden. Damit steht mit der erfindungsgemäßen Litze ein hochschwingfestes Spannglied zur Verfügung.

Von Vorteil ist schließlich, daß durch entsprechende Wahl des Materials für die Umhüllung der Einzeldrähte ein Korrosionsschutz für verschiedene Grade der Einwirkung erreicht werden kann; es können für die Umhüllung Edelstahlarten eingesetzt werden sowie unterschiedliche Metalle von Aluminium bis Titan. Der erreichte Korrosionsschutz ist widerstandsfähig gegen mechanische Beanspruchungen.

Zweckmäßigerweise werden für die Keilverankerung einer erfindungsgemäßen Litze für das Material der Umhüllung der Drähte und das Material der Keile Materialien mit geringem Potentialunterschied gewählt, um Erscheinungen von Spalt- oder Kontaktkorrosion zu vermeiden. Besteht die Umhüllung der Drähte aus Edelstahl, dann sollten auch die Keilsektoren aus Edelstahl bestehen, wobei allerdings darauf zu achten ist, daß diese an den Zahnspitzen eine üblichen Keilen aus Stahl entsprechende Härte aufweisen.

### Kurze Beschreibung der Zeichnungen:

Die Erfindung wird nachstehend anhand der Zeichnung näher erläutert. Es zeigt
- Fig. 1: einen Längsschnitt durch eine Keilverankerung einer Litze mit einem mehrteiligen Ringkeil,
- Fig. 2: eine Draufsicht auf den Ringkeil aus Richtung II-II in Fig. 1 und
- Fig. 3: das Detail III in Fig. 1 in größerem Maßstab.

### Wege zur Ausführung der Erfindung und gewerbliche Verwertbarkeit:

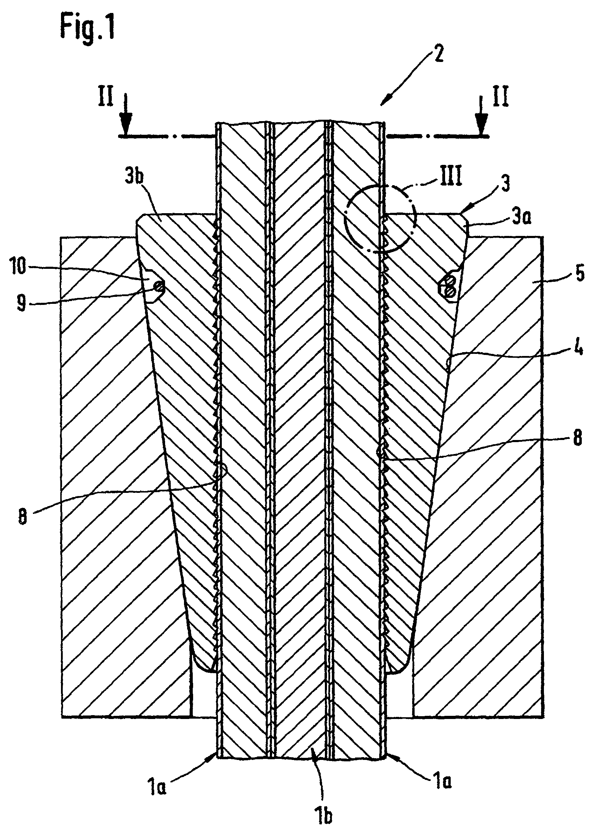

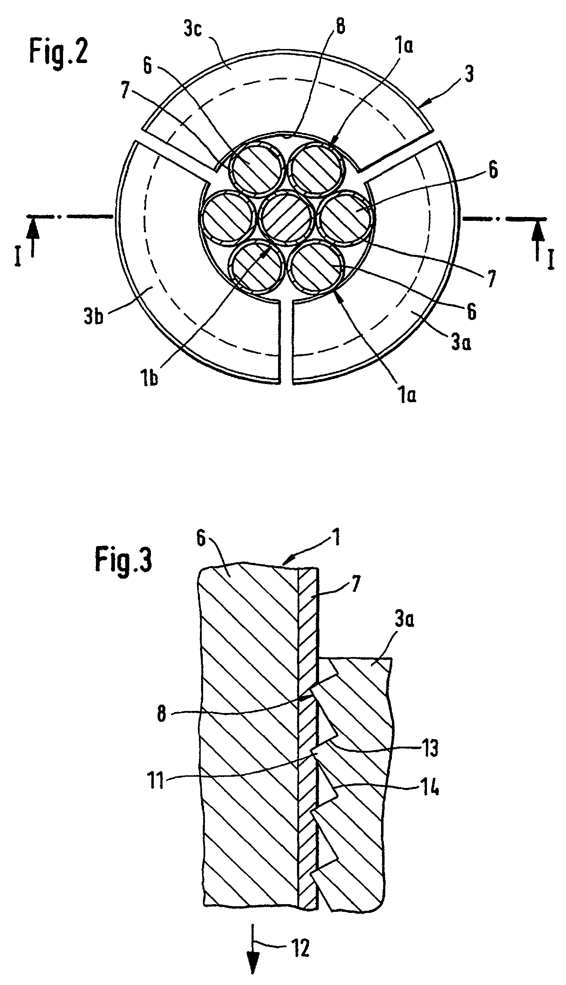

Bei der in Fig. 1 im Längsschnitt entlang der Linie I-I in Fig. 2 dargestellten Keilverankerung ist eine erfindungsgemäß aus Verbunddrähten 1 gebildete Litze 2 mittels eines mehrteiligen Ringkeils 3 in der konischen Bohrung 4 eines zylindrischen Ankerkörpers 5 verankert. Der Ankerkörper 5 stützt sich entweder in an sich bekannter Weise gegen eine - nicht dargestellte - Widerlagerplatte ab oder ist Teil einer Ankerscheibe, in der eine Mehrzahl von konischen Bohrungen 4 angeordnet ist.

Erfindungsgemäß besteht die Litze 2, wie bereits erwähnt, aus korrosionsgeschützten Verbunddrähten 1, insbesondere solchen gemäß der europäischen Patentanmeldung 93 104 666.8 (EP 0 563 735 A1). Zur Herstellung eines solchen Verbunddrahtes wird beispielsweise ein hochfester, patentierter und an der Oberfläche vorbehandelter Stahldraht 6 im Durchlaufverfahren von einem Edelstahlband umhüllt, das zu einer Umhüllung 7 längsgeschweißt und in einem ersten Umformschritt fest an den Kemdraht 6 angedrückt wird. Der Verbunddraht 1 wird sodann in nachfolgenden Ziehschritten auf Endabmessungen gezogen. Zumindest zwischen zwei Umformschritten erfolgt eine gezielte Glühbehandlung des Verbunddrahtes mittels eines rotierenden Lichtbogens, wobei nur die Umhüllung 7 aus Edelstahl auf Glühtemperatur erwärmt wird.

Die Litze 2 selbst besteht aus sieben einzelnen Verbunddrähten 1, und zwar sechs Außendrähten 1a, die sich um einen Zentraldraht 1b gruppieren. Die Durchmesser dieser Verbunddrähte entsprechen denjenigen üblicher Litzendrähte, schon um das gleiche Zubehör für die Verankerung verwenden zu können. So hat der Zentraldraht 1b insgesamt einen Durchmesser von 5,5 mm, die Außendrähte 1a einen Durchmesser von 5,0 mm. Die Umhüllung 7 aus Edelstahl hat eine Dicke von etwa 0,35 mm. Dies bedeutet, daß der Kerndraht 6 einen um die doppelte Dicke der Umhüllung 7 geringeren Durchmesser hat als ein üblicher Litzendraht. Die etwas geringere Querschnittsfläche des Kemdrahtes 6 wird durch die gemeinsame Kaltverformung zusammen mit der Umhüllung ausgeglichen.

Der Ringkeil 3 besteht aus drei Keilsektoren 3a, 3b und 3c, die jeweils an ihren der Litze 2 zugekehrten Innenflächen mit einer Zahnung 8 versehen sind. Die Zahnung 8 besteht im allgemeinen aus einem Gewinde, das in den kegelstumpfförmigen Keilkörper eingeschnitten wird, bevor er in die einzelnen Keilsektoren 3a, 3b und 3c zerschnitten wurde. Die Keilsektoren 3a, 3b und 3c werden durch einen Federring 9 zusammengehalten, der in eine Ringnut 10 eingelegt ist.

Wie Fig. 3, ein Detail III aus Fig. 1 in größerem Maßstab, zeigt, sind die Zähne 11 der Zahnung 8 unsymmetrisch ausgebildet. Die der durch den Pfeil 12 angedeuteten Richtung der Kraft zugekehrten Flanken 13 sind steiler, zum Beispiel unter 60° gegenüber der Längsachse der Litze 2 geneigt, die gegenüberliegenden Flanken 14 flacher, zum Beispiel unter 30° gegenüber der Längsachse geneigt.

Wie Fig. 3 ebenfalls erkennen läßt, dringen die Spitzen der Zähne 11 etwa bis zur Hälfte ihrer Dicke in die Umhüllung 7 aus Edelstahl ein, ohne allerdings bis zur Oberfläche des Kerndrahtes 6 vorzudringen. Durch die Vorbehandlung der Oberfläche des Kerndrahtes 6 und die gemeinsame Kaltverformung von Umhüllung 7 und Kemdraht 6 ist der Verbund zwischen beiden in der Berührungsfläche so gut, daß bei dieser Konstellation nicht nur eine einwandfreie Übertragung der Klemmkraft aus dem Keil bewirkt wird, sondern daß der Kerndraht 6 durch die Umhüllung 7 wie durch einen Mantel geschützt wird.

## Patentansprüche

1. Korrosionsgeschütztes Stahlzugglied aus einer Mehrzahl von zu einer Litze verdrillten Einzeldrähten,
bei dem jeder der Einzeldrähte aus einem durch Oberflächenbehandlung von Anlagerungen befreiten Stahldraht mit einer durchgehenden Umhüllung aus einem korrosionsbeständigen Metallblech besteht, die mit dem Kerndraht durch mindestens einen gemeinsamen Kaltverformungsvorgang mit Zwischenglühen der Umhüllung festhaftend verbunden ist.

2. Stahlzugglied nach Anspruch 1, **dadurch gekennzeichnet, daß** der Kemdraht aus einem hochfesten Stahldraht und die Umhüllung aus Edelstahl bestehen.

3. Stahlzugglied nach Anspruch 1 oder 2, **dadurch gekennzeichnet, daß** die Dicke der Umhüllung etwa 0,30 bis 0,45 mm beträgt.

4. Stahlzugglied nach einem der Ansprüche 1 bis 3, **dadurch gekennzeichnet, daß** Durchmesser und Festigkeit des Verbunddrahtes derjenigen eines üblichen Litzendrahtes entsprechen.

5. Stahlzugglied gemäß einem der vorhergehenden Ansprüche. **gekennzeichnet durch** die Verwendung als Bewehrungselement im Bauwesen, wobei zur Verbesserung des Verbundes bei Einbettung des Bewehrungselementes in Beton in die Oberflächen der Einzeldrähte Profilierungen in Form von Vertiefungen eingeprägt sind.

6. Stahlzugglied gemäß einem der vorhergehenden Ansprüche, **gekennzeichnet durch** die Verwendung als Zugglied im Bauwesen, insbesondere als Spannglied für Spannbeton, wobei zur Verankerung einer in das Zugglied eingetragenen Zugkraft an seinen Enden Keilverankerungen vorgesehen sind.

7. Keilverankerung mit einem Stahlzugglied gemäß Anspruch 6, wobei die Keilverankerung aus einem mehrteiligen, in einer konischen Bohrung angeordneten Ringkeil aus einzelnen Keilsektoren besteht, die an ihren, zum Angriff an dem Stahlzugglied bestimmten Innenflächen eine Profilierung tragen.

8. Keilverankerung mit Stahlzugglied nach Anspruch 7, **dadurch gekennzeichnet, daß** die Profilierung sägezahnförmig mit abgestumpften Zahnspitzen ausgebildet ist.

9. Keilverankerung mit Stahlzugglied nach Anspruch 8, **dadurch gekennzeichnet; daß** die Dicke der Umhüllung des Kemdrahtes des Stahlzugglieds sowie die Höhe und die Neigung der Zähne der Profilierung der Keilsektoren so aufeinander abgestimmt sind, daß die Zahnspitzen bei klemmender Fixierung des Stahlzugglieds die Umhüllung nicht durchdringen.

10. Keilverankerung mit Stahlzugglied nach Anspruch 9, **dadurch gekennzeichnet, daß** die Zahnspitzen etwa bis zur Hälfte bis Zweidrittel ihrer Dicke in die Umhüllung eindringen.

11. Keilverankerung mit Stahlzugglied nach einem der Ansprüche 7 bis 10, **dadurch gekennzeichnet, daß** die Höhe der Zähne etwa 0,5 mm und ihr Abstand etwa 1,0 bis 1,25 mm betragen.

12. Keilverankerung mit Stahlzugglied nach einem der Ansprüche 7 bis 11, **dadurch gekennzeichnet, daß** die Zähne unterschiedliche Flankenneigung aufweisen.

13. Keilverankerung mit Stahlzugglied nach Anspruch 12, **dadurch gekennzeichnet, daß** die steiler geneigten Flanken der Kraftrichtung zugewandt sind.

14. Keilverankerung mit Stahlzugglied nach Anspruch 12 oder 13, **dadurch gekennzeichnet, daß** die Flanken der Zähne etwa unter 60° bzw. 30° zur Kraftrichtung geneigt verlaufen.

15. Keilverankerung mit Stahlzugglied nach einem der Ansprüche 7 bis 14, **dadurch gekennzeichnet, daß** die Keilsektoren aus einem Material bestehen, dessen Korrosionsverhalten günstig ist zu dem Material der Umhüllung der Einzeldrähte.

16. Keilverankerung mit Stahlzugglied nach Anspruch 15, **dadurch gekennzeichnet, daß** die Keilsektoren aus Edelstahl bestehen.

## Claims

1. A corrosion-protected steel tension member comprising a plurality of individual wires twisted to form a strand, in which each of the individual wires comprises a steel wire freed of accretions by surface treatment and having a continuous sheathing of a corrosion-resistant metal sheet, which is connected adherently to the core wire by at least one common cold-working operation with intermediate annealing of the sheathing.

2. A steel tension member according to Claim 1, **characterised in that** the core wire consists of a high-strength steel wire and the sheathing consists of high-quality steel.

3. A steel tension member according to Claim 1 or 2, **characterised in that** the thickness of the sheathing is approximately 0.30 to 0.45 mm.

4. A steel tension member according to any one of Claims 1 to 3, **characterised in that** the diameter and strength of the composite wire correspond to those of a conventional stranded wire.

5. A steel tension member according to any one of the preceding Claims, **characterised by** being used as a reinforcing element in the construction industry, wherein, to improve the bond when embedding the reinforcing element in concrete, profiled elements in the form of recesses are impressed into the surfaces of the individual wires.

6. A steel tension member according to any one of the preceding Claims, **characterised by** being used a tension member in the construction industry, in particular as a tendon for prestressed concrete, wherein wedge anchorings are provided at the ends of the tension member for anchoring a tensile force applied thereto.

7. A wedge anchoring with a steel tension member according to Claim 6, wherein the wedge anchoring comprises a multipart annular wedge arranged in a conical bore and composed of individual wedge sectors which on their inner surface are provided with profiled elements intended for engagement on the steel tension member.

8. A wedge anchoring with a steel tension member according to Claim 7, **characterised in that** the profiled element is sawtooth-shaped with truncated tooth crests.

9. A wedge anchoring with a steel tension member according to Claim 8, **characterised in that** the thickness of the sheathing of the core wire of the steel tension member and the height and inclination of the teeth of the profiled element of the wedge sectors are so co-ordinated with one another that the tooth crests do not penetrate the sheathing when the steel tension member is secured by clamping.

10. A wedge anchoring with a steel tension member according to Claim 9, **characterised in that** the tooth crests penetrate into the sheathing approximately up to half to two thirds of their thickness.

11. A wedge anchoring with a steel tension member according to any one of Claims 7 to 10, **characterised in that** the height of the teeth is approximately 0.5 mm and their pitch is approximately 1.0 to 1.25 mm.

12. A wedge anchoring with a steel tension member according to any one of Claims 7 to 11, **characterised in that** the teeth have different flank inclination.

13. A wedge anchoring with a steel tension member according to Claim 12, **characterised in that** the more steeply inclined flanks are turned towards the force direction.

14. A wedge anchoring with a steel tension member according to Claim 12 or 13, **characterised in that** the flanks of the teeth extend inclined approximately at 60° or 30° to the force direction.

15. A wedge anchoring with a steel tension member according to any one of Claims 7 to 14, **characterised in that** the wedge sectors comprise a material whose corrosion behaviour is favourable with respect to the material of the sheathing of the individual wires.

16. A wedge anchoring with a steel tension member according to Claim 15, **characterised in that** the wedge sectors consist of high-quality steel.

## Revendications

1. Membre tendu en acier protégé de la corrosion, composé de plusieurs fils métalliques tournés en toron,
dont chacun des fils individuels comprend un fil en acier débarrassé d'incrustations par un traitement de surface avec une enveloppe continue en tôle métallique résistante à la corrosion qui est liée de manière adhérente au fil central par au moins un procédé commun d'écrouissage avec recuit intermédiaire de l'enveloppe.

2. Membre tendu en acier selon la revendication 1, **caractérisé en ce que** le fil central est un fil d'acier à haute résistance, et **en ce que** l'enveloppe est en acier raffiné.

3. Membre tendu en acier selon l'une quelconque des revendications 1 ou 2, **caractérisé en ce que** l'enveloppe présente une épaisseur de 0,30 à 0,45 mm.

4. Membre tendu en acier selon l'une quelconque des revendications 1 à 3, **caractérisé en ce que** le diamètre et la résistance du fil métallique correspondent à ceux d'un toron usuel.

5. Membre tendu en acier selon l'une quelconque des revendications précédentes, **caractérisé en ce qu'**il est utilisé comme élément d'armature dans la construction, des profils en forme de cavités étant matricés dans les surfaces des fils individuels pour une meilleure liaison lors de l'encastrement de l'élément d'armature dans le béton.

6. Membre tendu en acier selon l'une quelconque des revendications précédentes, **caractérisé en ce qu'**il est utilisé comme membre tendu dans la construction, notamment comme membre tendeur pour le béton précontraint, des ancrages par clavette étant prévus à ses extrémités pour l'ancrage d'une force de tension chargée dans le membre tendu.

7. Ancrage par clavette avec un membre tendu en acier selon la revendication 6, **caractérisé en ce que** l'ancrage par clavette comprend, disposée dans une forure conique, une clavette annulaire multiple en plusieurs secteurs qui présentent un profil sur les faces intérieures destinées à agripper le membre tendu en acier.

8. Ancrage par clavette avec un membre tendu en acier selon la revendication 7, **caractérisé en ce que** le profil est en forme de dents de scie avec des pointes de dents tronquées.

9. Ancrage par clavette avec un membre tendu en acier selon la revendication 8, **caractérisé en ce que** l'épaisseur de l'enveloppe de l'âme du membre tendu en acier et la hauteur et l'inclinaison des dents du profil des secteurs de la clavette sont accordées de manière à ce que les pointes des dents ne percent pas l'enveloppe lors d'une fixation serrée du membre tendu en acier.

10. Ancrage par clavette avec un membre tendu en acier selon la revendication 9, **caractérisé en ce qu'**entre une moitié et deux tiers de l'épaisseur, des pointes des dents pénètrent dans l'enveloppe.

11. Ancrage par clavette avec un membre tendu en acier selon l'une quelconque des revendications 7 à 10, **caractérisé en ce que** les dents présentent une hauteur d'environ 0,5 mm et un espacement de 1,0 à 1,25 mm

12. Ancrage par clavette avec un membre tendu en acier selon l'une quelconque des revendications 7 à 11, **caractérisé en ce que** les dents présentent des flancs différemment inclinés.

13. Ancrage par clavette avec un membre tendu en acier selon la revendication 12, **caractérisé en ce que** les flancs les plus inclinés sont tournés vers la direction de la force.

14. Ancrage par clavette avec un membre tendu en acier selon l'une quelconque des revendications 12 et 13, **caractérisé en ce que** les flancs des dents sont inclinés de moins de 60° et de préférence de 30° par rapport à la direction de la force.

15. Ancrage par clavette avec un membre tendu en acier selon l'une quelconque des revendications 7 à 14, **caractérisé en ce que** les secteurs de la clavette sont composés en un matériau dont la résistance à la corrosion est appropriée au matériau des fils individuels.

16. Ancrage par clavette avec un membre tendu en acier selon la revendication 15, **caractérisé en ce que** les secteurs de la clavette sont en acier raffiné.
